# DEMANDE DE BREVET EUROPEEN

(11) **EP 1 494 146 A1**
(43) Date de publication de la demande: **05.01.2005**
(21) Numéro de dépôt: 04291638.7
(22) Date de dépôt: 29.06.2004
(51) Int. Cl.: G06F 17/30

(54) **Procédé de suivi d'informations accessibles sur des sites, serveur et programme pour sa mise en oeuvre**

(30) Priorité: 01.07.2003 FR 0307966
(71) Demandeur: FRANCE TELECOM, 75015 Paris (FR)
(72) Inventeur: Ortholand, Jean-Michel, 38760 Saint-Paul De Varces (FR); Grattard, Gilles, 38610 Gieres (FR)
(74) Mandataire: Loisel, Bertrand

(57) **Abrégé**

Dans une phase de configuration, un utilisateur fournit des données d'identification et des données de spécification de zones de sites sélectionnés par l'utilisateur et d'événements à surveiller en relation avec des informations contenues dans ces zones. Dans une phase de scrutation, exécutée ensuite de façon récurrente, un serveur (10) relié à un réseau de télécommunications (11) consulte automatiquement les zones de sites spécifiées pour détecter l'occurrence desdits événements. Un ou plusieurs messages signalant les événements détectés est adressé à l'utilisateur sur le média de son choix.

## Description

La présente invention concerne les techniques d'accès à des informations par l'intermédiaire de réseaux, et particulièrement à des informations mises à disposition sur des sites Web.

Le Web est un système bien connu par lequel des sites mettent à disposition d'utilisateurs des informations accessibles via Internet ou un Intranet. Souvent, ces informations hébergées par les sites sont organisées en pages écrites dans un langage de description approprié tel que HTML ("Hypertext Markup Language") ou en fichiers. Elles peuvent être consultées par les utilisateurs au moyen de logiciels appelés navigateurs mettant en oeuvre des protocoles de transfert appropriés tels que HTTP ("Hypertext Transfer Protocol") ou FTP ("File Transfer Protocol") ainsi que divers types d'interface homme-machine (IHM) pour la présentation aux utilisateurs.

Les outils du Web sont bien connus et sont notamment décrits dans les documents normatifs de l'IETF ("Internet Engineering Task Force") et du W3C ("World Wide Web Consortium").

Une page HTML comporte des données délimitées par des marqueurs ("tags"). Les marqueurs se rapportent à des commandes pour la présentation des informations de la page: par exemple le marqueur <P> indique un nouveau paragraphe, le marqueur <B> indique que le texte qui suit (jusqu'au marqueur de fin </B>) est à afficher en caractères gras, etc. D'autres marqueurs se rapportent à des commandes liées à des actions à exécuter par le navigateur: par exemple le marqueur <A HREF="url" > représente un lien indiquant que le texte qui suit (jusqu'au marqueur de fin </A>) est à afficher comme une zone de commande qui, en réponse à une action de l'utilisateur (souvent un clic de souris), provoque le chargement d'une autre page stockée à l'adresse url écrite au format des URL ("Uniform Resource Locator", par exemple http://www.francetelecom.com/).

Les données délimitées par les marqueurs représentent de l'information sémantique à délivrer à l'utilisateur. Ces données sont présentées avec des attributs graphiques contrôlés par les marqueurs, plus ou moins sophistiqués selon les capacités du navigateur et de la plate-forme où il s'exécute.

Certains procédés permettent aujourd'hui de notifier, à un utilisateur qui le demande, l'apparition d'une nouvelle information sur un site Web donné (actualités, nouveau produit, franchissement d'un seuil, etc.).

Ces procédés impliquent le développement, par le gestionnaire du site, d'une fonctionnalité qui scrute les données concernées, contenues dans des bases de données, dans des fichiers, ou directement dans une page HTML. Sur détection d'un changement spécifié (nouvelles données, franchissement d'un seuil, ...), cette fonctionnalité appelle un mécanisme de diffusion (envoi d'e-mail, SMS, ...).

Des produits comme le logiciel "News Interceptor" de la société Digital Dream (voir http://www.newsinterceptor.com/) permettent une notification, via un programme spécifique installé sur un ordinateur personnel (PC), de l'arrivée d'informations sur une liste de sites spécifique, définie par le fournisseur de ce logiciel. L'appartenance d'un site à cette liste suppose l'accord préalable du gestionnaire de ce site.

Avec les méthodes ci-dessus, l'utilisateur final d'Internet ne peut pas se faire notifier une information issue d'un site de son choix, quand la fonctionnalité de notification n'est offerte ni par le gestionnaire du site, ni par des fournisseurs de produits tels que News Interceptor.

D'autre part, un webmaster ne peut proposer un tel service que s'il possède des connaissances pointues en informatique.

Un but de la présente invention est de pallier cette limitation des techniques existantes.

L'invention propose ainsi un procédé de suivi d'informations accessibles sur des sites par l'intermédiaire d'un réseau de télécommunications tel que défini dans la revendication 1.

Ces dispositions permettent à un utilisateur final d'Internet de sélectionner une zone d'information d'une page Web quelconque, ou limitée à certains sites par le webmaster du service, et de demander une notification lorsqu'un événement spécifié intervient dans cette zone (apparition d'une nouvelle information, franchissement d'un seuil, etc.), et cela de façon indépendante du gestionnaire du site Web, ou d'un autre fournisseur de produit. Grâce au procédé, l'utilisateur est autonome dans son choix.

Un autre aspect de la présente invention se rapporte à un serveur pour la mise en oeuvre du procédé défini ci-dessus, tel que défini dans la revendication 8.

Un autre aspect de la présente invention se rapporte à un programme d'ordinateur à installer dans un serveur raccordable à un réseau de télécommunications, tel que défini dans la revendication 15.

D'autres particularités et avantages de la présente invention apparaîtront dans la description ci-après d'exemples de réalisation non limitatifs, en référence aux dessins annexés, dans lesquels :
- la figure 1 est un schéma synoptique illustrant la phase de configuration dans une réalisation du procédé selon l'invention;
- la figure 2 est un schéma synoptique illustrant une opération de structuration graphique intervenant dans cette phase de configuration; et
- la figure 3 est un schéma synoptique illustrant les phases de scrutation et de compte rendu du procédé.

L'invention est décrite ci-après dans son application à un service de notification externe d'événements détectés en relation avec des données contenues dans une ou plusieurs pages Web. Le mode de réalisation décrit repose sur les éléments techniques suivants:
- un service Web de configuration du service par un utilisateur final: enregistrement de l'utilisateur, choix des informations pour lesquelles l'utilisateur souhaite recevoir des notifications, coordonnées des médias à utiliser pour la notification;
- un service informatique, scrutant en permanence les différentes informations demandées par les différents utilisateurs enregistrés, et détectant l'apparition d'un événement comme par exemple l'apparition d'une nouvelle information, le dépassement d'un seuil par la valeur de données spécifiées par l'utilisateur, etc.; et
- un serveur d'envoi, permettant de transmettre à un ou plusieurs utilisateurs, une ou plusieurs informations, sur le ou les différents médias spécifiés par ces utilisateurs.

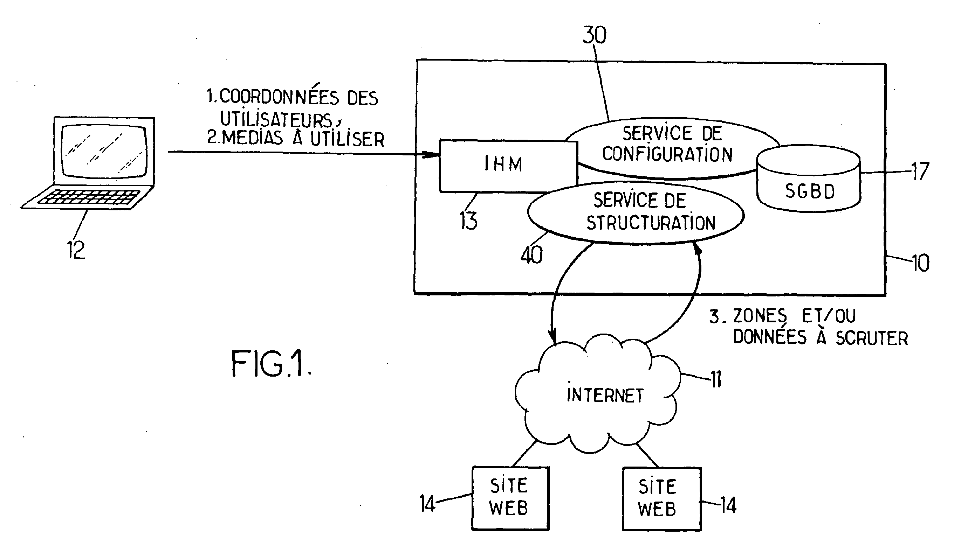

La figure 1 montre un serveur 10 pour la mise en oeuvre du service de configuration. Dans la réalisation considérée, c'est un serveur Web relié à l'Internet 11. Des terminaux d'utilisateurs 12 communiquent avec ce serveur 10, notamment à travers le réseau Internet 11. Ces terminaux, pouvant être de nature diverse, incluent un logiciel de navigation pour accéder à l'interface homme-machine (IHM) 13 du serveur Web.

L'interface homme-machine 13 inclut typiquement une page d'accueil du service au format HTML, présentant des champs pour que l'utilisateur accède au service de configuration 30 qui lui permet de s'abonner au service de notification externe, et de fournir l'ensemble des renseignements utiles, à savoir:
- renseignements administratifs, pouvant se limiter à la fourniture d'un numéro de compte et d'un mot de passe associé, ou comporter la fourniture d'autres informations, notamment bancaires dans le cas où c'est utile à la une facturation du service;
- coordonnées des différents adresses pouvant être utilisées pour la notification (numéro de téléphone fixe ou mobile, numéro de fax, adresse de messagerie électronique, etc.), ainsi que d'éventuels renseignements associés comme par exemple des plages horaires à utiliser pour l'envoi des messages de notification;
- zones ou données contenues dans des pages Web qui intéressent l'utilisateur, à scruter pour la génération de notification. La saisie de ces zones se fait avantageusement de façon graphique par l'utilisateur;
- spécification des événements devant faire l'objet de notifications (par exemple la valeur de données incluses dans une zone sélectionnée change par rapport à la notification précédente, franchit un seuil, est inférieure ou supérieure à une autre valeur incluse dans une autre zone sélectionnée, etc.); et
- d'autres renseignements, éventuellement laissés au choix de l'utilisateur comme par exemple la fréquence de scrutation des données.

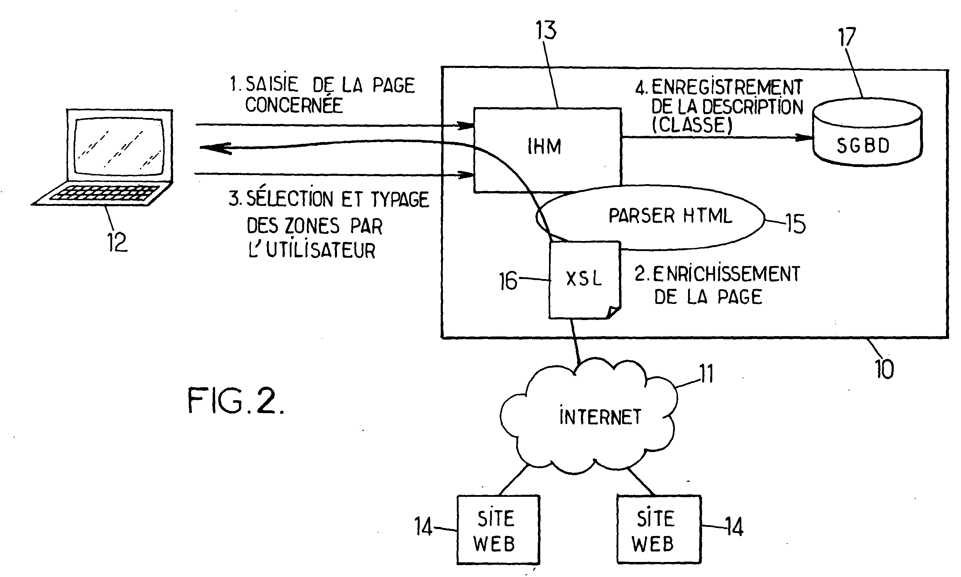

Hormis la définition des zones à scruter, la fourniture de ces renseignements repose sur la technique classique des formulaires HTML. Un champ du formulaire est destiné à recevoir une adresse de la page Web accessible sur un site 14 d'où l'utilisateur souhaiterait que les informations qui l'intéressent soient extraites. Cette adresse peut être fournie sous forme d'URL. La validation de cette adresse active un service de structuration graphique 40 dont le fonctionnement est illustré par la figure 2.

Le serveur 10 consulte la page Web ayant l'adresse indiquée, qu'il récupère de façon classique par une requête HTTP, et il l'analyse pour l'enrichir d'éléments graphiques de sélection de zones. Cette analyse de la page HTML ("parsing") est effectuée par le module 15 de la figure 2 (parser HTML) à l'aide d'une feuille de style 16 établie selon le langage XSL ("XML Stylesheet Language").

Les langages XSL et XML ("eXtended Markup Language") sont bien connus de l'homme du métier. Les feuilles de style XSL se composent de règles permettant de sélectionner des éléments d'un document XML ou HTML et de leur appliquer des attributs de formatage. Dans le cas présent, la feuille de style 16 contrôle le module de parsing HTML 15 pour qu'il repère les zones de présentation de données dans la page indiquée par l'utilisateur et associe à chacune de ses zones:
- un identifiant unique de zone;
- des éléments graphiques supplémentaires, tels que par exemple une couleur spécifique de fond et/ou de caractères, permettant à l'utilisateur de visualiser qu'il s'agit d'une zone sélectionnable lorsque la page est affichée;
- un formulaire destiné à recevoir les données de classification de l'utilisateur, notamment le type de zone. Le typage peut être proposé via une liste de choix incluse dans le formulaire, ou laissé complètement libre à l'utilisateur.

Une fois que l'analyse de la page est achevée, le serveur 10 transmet la page enrichie au terminal 12 de l'utilisateur pour affichage.

L'utilisateur est invité à sélectionner successivement, par exemple à la souris, les zones qui l'intéressent. La sélection d'une zone provoque l'affichage du formulaire transmis dans la page enrichie (ce formulaire ne s'affiche que sur sélection de la zone correspondante). A l'aide de ce formulaire, l'utilisateur saisit, ou choisit dans une liste, les données de classification pertinentes, qui peuvent se limiter au type de zone, puis valide son choix.

Suite au typage d'une zone, les zones "équivalentes" de la page, c'est-à-dire celles qui contiennent d'autres occurrences d'un même type d'information (par exemple plusieurs occurrences d'un titre dans une liste d'articles) sont repérées automatiquement sur la base de similitudes de structuration HTML (par exemple marqueurs identiques). Si l'utilisateur sélectionne l'une de ces zones équivalentes, il peut constater dans le formulaire qui s'affiche que ces zones ont été typées de la même façon.

Un bouton de soumission est inclus dans la page enrichie pour que l'utilisateur le clique une fois qu'il a terminé de sélectionner les zones qui l'intéressent et de fournir les données de classification s'y rapportant. L'activation de ce bouton provoque l'envoi au serveur 10 des formulaires remplis pour les zones qui ont été sélectionnées (étape 3 sur la figure 2). Le serveur 10 enregistre alors, dans une base de données 17 dont il dispose, une description des données de classification fournies par l'utilisateur et les identifiants des zones de présentation correspondantes (étape 4). L'URL de la page d'origine est également conservée dans la base de données 17. La conservation de ces données est naturellement effectuée en relation avec l'identifiant de l'utilisateur.

Dans une réalisation préférée, le serveur enregistre de manière persistante l'association page/identifiant de zone/typage une seule fois pour un ensemble de zones équivalentes. L'identifiant de zone enregistré permet alors de repérer n'importe quel élément d'un ensemble de zones équivalentes. Ce typage revient à stocker de façon persistante la description de zones équivalentes, se trouvant sur une page Web. En d'autres termes, on enregistre une classe d'objets, et les données contenues dans les zones sont alors des instanciations de cette classe.

La base de données 17 sauvegarde l'ensemble des informations fournies par l'utilisateur (renseignements administratifs, adresses de notification, zones à scruter et données de classification associées, le cas échéant fréquence de scrutation, etc.) en liaison avec l'identifiant de cet utilisateur, afin de permettre leur utilisation future par les autres éléments du système. Lors du choix par l'utilisateur des différentes zones ou données qui l'intéressent, le service de configuration stocke également dans la base de données 17 l'état initial de ces données, afin qu'un changement puisse être détecté par la suite.

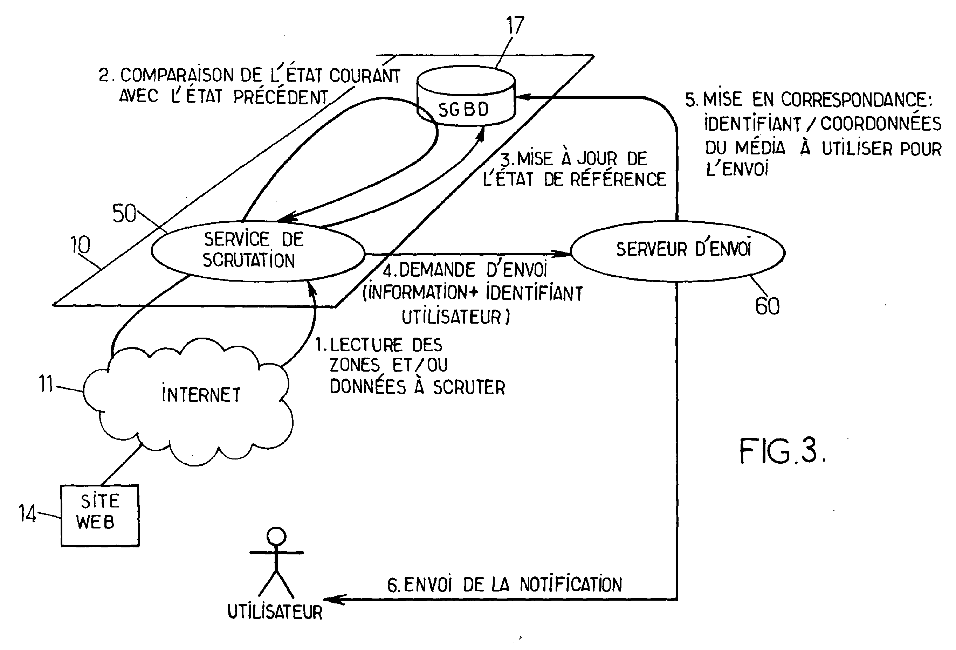

La figure 3 montre un ordinateur 10 mettant en oeuvre le service 50 de scrutation des informations demandées d'extraction d'informations conformément à la structuration graphique ainsi opérée. Dans la réalisation considérée, cet ordinateur est confondu avec le serveur Web précité 10. Mais il pourrait aussi être une machine distincte, ayant accès à la base de données 17.

Le service de scrutation 50 fonctionne en permanence. Il scrute les différentes zones ou données choisies par tous les utilisateurs inscrits dans la base 17, et cela à intervalles de temps réguliers. Ces intervalles peuvent être définis par chaque utilisateur, ou pris égaux à une valeur par défaut, par exemple de quelques minutes à quelques heures.

Les données sont extraites des pages concernées sur la base des descriptions de zone (ou de classe) préalablement enregistrées pour les différents utilisateurs. Un mode d'implémentation peut être le suivant:
- à partir de la description enregistrée pour l'utilisateur, une feuille de style XSL est générée;
- à l'aide d'un module de parsing HTML, cette feuille de style est appliquée à la page HTML concernée, téléchargée de nouveau depuis le site Web 14, afin d'extraire les informations qui se trouvent actuellement dans les zones qui ont été sélectionnées par l'utilisateur;
- le résultat du parsing est un flot structuré des données extraites, formant un document avantageusement construit en langage XML.

Ce document contient typiquement les données extraites en relation avec les types de zones et leurs identifiants. Les données issues de zones équivalentes peuvent être marquées comme telles. Le document peut aussi inclure des informations d'horodatage.

Le service de scrutation 50 analyse les valeurs récupérées pour détecter les occurrences des événements détectés par les utilisateurs. Selon les renseignements obtenus dans la phase de configuration, cette analyse peut comporter une comparaison des valeurs récupérées avec les valeurs antérieures stockées dans la base de données 17 (cas de l'étape 2 de la figure 3), avec les seuils éventuellement indiqués par les utilisateurs, etc.

En réponse à la détection d'un événement spécifié, le service de scrutation adresse au serveur d'envoi 60 l'ensemble des données nécessaires à la notification du ou des utilisateurs concernés (informations à envoyer notamment sous la forme du document XML précité, identifiants du ou des utilisateurs, ...). Lorsque la notification est consécutive au changement d'une valeur, elle donne lieu à une mise à jour de l'état de référence dans la base de données 17 (étape 3 de la figure 3).

Le serveur d'envoi 60 est un maillon essentiel, mais il peut fonctionner indépendamment du serveur 10. A la demande du service de scrutation 50, il procède aux opérations suivantes:
- retrouver, à partir des identifiants d'utilisateurs transmis, les coordonnées des médias à utiliser (fax, e-mail, SMS, ...) pour notifier les différents utilisateurs concernés ainsi que des renseignements complémentaires comme par exemple les tranches horaires indiquées par l'utilisateur pour la réception des messages de compte rendu;
- transmettre les informations reçues du service de scrutation 50 sur ces différents médias. Le document XML peut être converti sous une forme adaptée à chaque média à l'aide d'un processeur XSLT.

Pour mettre en correspondance l'identifiant d'utilisateur et les médias et adresses à employer, le serveur d'envoi 60 s'appuie sur les données fournies par l'utilisateur dans la phase de configuration. Il accède pour cela à la base de données 17 (étape 5 de la figure 3). Une autre possibilité est que le serveur 10 lui transmette la table de cette base qui associe les identifiants des utilisateurs aux conditions qu'ils indiquent pour l'envoi des messages de compte rendu.

## Revendications

1. Procédé de suivi d'informations accessibles sur des sites (14) par l'intermédiaire d'un réseau de télécommunications (11), comprenant:
- une phase de configuration dans laquelle un utilisateur fournit des données d'identification et des données de spécification de zones de sites sélectionnés par l'utilisateur et d'événements à surveiller en relation avec des informations contenues dans lesdites zones;
- une phase de scrutation dans laquelle un serveur (10) relié au réseau consulte automatiquement les zones de sites spécifiées pour détecter l'occurrence desdits événements; et
- une phase de compte rendu dans laquelle au moins un message signalant les événements détectés est adressé à l'utilisateur.

2. Procédé selon la revendication 1, dans lequel la phase de configuration comporte la fourniture par l'utilisateur de coordonnées pour l'envoi du message dans la phase de compte rendu.

3. Procédé selon l'une quelconque des revendications précédentes, dans lequel la phase de configuration comporte la fourniture par l'utilisateur de données indiquant une fréquence d'exécution de la phase de scrutation pour au moins une zone de site spécifiée.

4. Procédé selon l'une quelconque des revendications précédentes, dans lequel les événements à surveiller comprennent le changement d'une information contenue dans une zone de site spécifiée par l'utilisateur.

5. Procédé selon l'une quelconque des revendications précédentes, dans lequel les événements à surveiller comprennent le franchissement d'un seuil par une valeur contenue dans une zone de site spécifiée par l'utilisateur.

6. Procédé selon l'une quelconque des revendications précédentes, dans lequel la phase de configuration comprend une structuration graphique d'informations incluant les étapes suivantes:
- analyse d'une page disponible sur le site (14) pour repérer au moins une zone de présentation de données dans ladite page, et pour construire une page enrichie dans laquelle chaque zone de présentation repérée est associée à un identifiant de zone, à des éléments graphiques de sélection et à un formulaire;
- affichage de la page enrichie sur un terminal (12) de l'utilisateur et, en réponse à la sélection par l'utilisateur d'une zone repérée de la page, présentation sur le terminal du formulaire associé à la zone sélectionnée pour l'entrée de données de classification par l'utilisateur en relation avec la zone sélectionnée; et
- enregistrement pour l'utilisateur de paramètres représentant une correspondance entre les données de classification entrées par l'utilisateur en relation avec chaque zone sélectionnée et l'identifiant de ladite zone sélectionnée.

7. Procédé selon la revendication 6, dans lequel la phase de scrutation comprend les étapes suivantes:
- accès à la page sur le site (14);
- analyse de la page en organisant les informations apparaissant dans les zones sélectionnées par l'utilisateur conformément aux données de classification entrées par l'utilisateur en relation avec lesdites zones;
- construction d'un document contenant les informations ainsi organisées; et
- traitement du document pour détecter l'occurrence desdits événements.

8. Serveur (10) pour le suivi d'informations accessibles sur des sites (14) par l'intermédiaire d'un réseau de télécommunications (11), comprenant une interface réseau pour l'accès aux sites, des moyens (50) de scrutation d'un ensemble de sites sélectionnés par au moins un utilisateur, dans des zones de ces sites spécifiées par l'utilisateur, pour détecter l'occurrence d'événements à surveiller, spécifiés par l'utilisateur, en relation avec des informations contenues dans lesdites zones, et des moyens (60) pour déclencher l'envoi à l'utilisateur d'au moins un message de compte rendu signalant les événements détectés par les moyens de scrutation.

9. Serveur selon la revendication 8, comprenant en outre des moyens de configuration (30, 40) pour enregistrer des données d'identification et des données de spécification fournies par chaque utilisateur, les données de spécification spécifiant les zones de sites sélectionnés par l'utilisateur et les événements à surveiller.

10. Serveur selon la revendication 9, dans lequel les moyens de configuration (30) sont en outre agencés pour enregistrer des coordonnées fournies par chaque utilisateur pour l'envoi des messages de compte rendu.

11. Serveur selon l'une quelconque des revendications 8 à 10, dans lequel les moyens de scrutation (50) sont agencés pour consulter les zones des sites sélectionnés par au moins un utilisateur à une fréquence indiquée par ledit utilisateur.

12. Serveur selon l'une quelconque des revendications 8 à 11, comprenant en outre des moyens de messagerie (60) pour construire les messages de compte rendu et les expédier aux utilisateurs en réponse aux événements détectés par les moyens de scrutation (50).

13. Serveur selon l'une quelconque des revendications 8 à 12, comprenant en outre des moyens (40) de structuration graphique d'informations incluant:
- des moyens (15) d'analyse d'une page disponible sur le site (14) pour repérer au moins une zone de présentation de données dans ladite page, et pour construire une page enrichie dans laquelle chaque zone de présentation repérée est associée à un identifiant de zone, à des éléments graphiques de sélection et à un formulaire;
- des moyens (13) de transmission de la page enrichie à un terminal (12) de l'utilisateur et de récupération de données de classification entrées par l'utilisateur en relation avec au moins une zone sélectionnée parmi les zones de présentation repérées dans la page enrichie; et
- des moyens (17) d'enregistrement pour l'utilisateur de paramètres représentant une correspondance entre les données de classification entrées par l'utilisateur en relation avec chaque zone sélectionnée et l'identifiant de ladite zone sélectionnée.

14. Serveur selon la revendication 13, dans lequel les moyens de scrutation (50) comprennent des moyens pour accéder à la page sur le site (14) après enregistrement des paramètres pour l'utilisateur, des moyens d'analyse de la page en organisant les informations apparaissant dans les zones sélectionnées par l'utilisateur conformément aux données de classification entrées par l'utilisateur en relation avec lesdites zones, des moyens de construction d'un document contenant les informations ainsi organisées, et des moyens de traitement du document pour détecter l'occurrence desdits événements.

15. Programme d'ordinateur à installer dans un serveur (10) raccordable à un réseau de télécommunications (11), comprenant des instructions pour mettre en oeuvre un procédé selon l'une quelconque des revendications 1 à 7 lors d'une exécution du programme par des moyens de traitement dudit serveur.
